# EUROPEAN PATENT APPLICATION

(11) **EP 3 110 147 A1**
(43) Date of publication of application: **28.12.2016**
(21) Application number: 16165149.2
(22) Date of filing: 13.04.2016
(51) Int. Cl.: H04N 7/18

(54) **METHOD AND DEVICE FOR PROCESSING REQUEST**

(30) Priority: 26.06.2015 CN 201510369410
(71) Applicant: Xiaomi Inc., Beijing 100085 (CN)
(72) Inventor: LI, Feiyun, 100085 Haidian District (CN); CHEN, Changbing, 100085 Haidian District (CN); HOU, Enxing, 100085 Haidian District (CN)
(74) Representative: Reeve, Nicholas Edward

(57) **Abstract**

The present disclosure relates to a method and a device for processing a request in the field of smart homes for example. The method includes: receiving a query request sent by a first terminal, in which the query request is configured to request to query camera data collected by a camera, and the camera data includes image data and/or video data; judging whether an account corresponding to the first terminal has a permission of obtaining the camera data collected by the camera according to the query request; pushing a first prompt message to a second terminal bound to the camera if the account corresponding to the first terminal does not have the permission of obtaining the camera data collected by the camera, in which the first prompt message is configured to prompt that the camera data is accessed abnormally.

## Description

### TECHNICAL FIELD

The present disclosure relates to the field of smart homes, and more particularly, to a method and a device for processing a request.

### BACKGROUND

An intelligent camera is an important component in smart homes. Camera data collected by the intelligent camera may be pushed to a smartphone and other monitoring terminals of a user, so that the user may view it.

In the related art, an account of an intelligent camera owner may share a usage permission of the camera to specified accounts via a mobile phone client. After obtaining this permission, a sharer may initiate a request for viewing a real-time video of the camera via a server. After a verification, the camera will send compressed real-time video stream data to the mobile phone client logging in the account, and then software in the mobile phone client may display the video content after decompression.

### SUMMARY OF THE INVENTION

Embodiments of the present disclosure provide a method and a device for processing a request.

According to a first aspect of embodiments of the present disclosure, a method for processing a request is provided, which includes: receiving a query request sent by a first terminal, in which the query request is configured to request to query camera data collected by a camera, and the camera data includes image data and/or video data; judging whether an account corresponding to the first terminal has a permission of obtaining the camera data collected by the camera according to the query request; pushing a first prompt message to a second terminal bound to the camera if the account corresponding to the first terminal does not have the permission of obtaining the camera data collected by the camera, in which the first prompt message is configured to prompt that the camera data is accessed abnormally.

Alternatively, the method further includes: pushing a second prompt message to a third terminal if the account corresponding to the first terminal does not have the permission of obtaining the camera data collected by the camera; in which the third terminal is a terminal for maintaining and managing the camera data collected by the camera, and the second prompt message is configured to prompt whether to track the first terminal.

Alternatively, the query request includes the account corresponding to the first terminal; and judging whether an account corresponding to the first terminal has a permission of obtaining the camera data collected by the camera according to the query request includes: detecting whether the account corresponding to the first terminal is in an access permission list corresponding to the camera, in which the access permission list includes an account corresponding to each terminal having the permission of obtaining the camera data collected by the camera; determining that the account corresponding to the first terminal has the permission of obtaining the camera data collected by the camera if the account corresponding to the first terminal is in the access permission list; determining that the account corresponding to the first terminal does not have the permission of obtaining the camera data collected by the camera if the account corresponding to the first terminal is not in the access permission list.

Alternatively, before receiving a query request sent by a first terminal, the method further includes: receiving a binding request sent by the second terminal or the camera, in which the binding request includes an account corresponding to the second terminal; adding the account corresponding to the second terminal to the access permission list.

Alternatively, the method further includes: receiving a sharing request sent by the second terminal, in which the sharing request includes an account corresponding to a fourth terminal; adding the account corresponding to the fourth terminal to the access permission list.

According to a second aspect of embodiments of the present disclosure, a device for processing a request is provided, which includes: a query request receiving module, configured to receive a query request sent by a first terminal, in which the query request is configured to request to query camera data collected by a camera, and the camera data includes image data and/or video data; a judging module, configured to judge whether an account corresponding to the first terminal has a permission of obtaining the camera data collected by the camera according to the query request; a first prompting module, configured to push a first prompt message to a second terminal bound to the camera if the account corresponding to the first terminal does not have the permission of obtaining the camera data collected by the camera, in which the first prompt message is configured to prompt that the camera data is accessed abnormally.

Alternatively, the device further includes: a second prompting module, configured to push a second prompt message to a third terminal if the account corresponding to the first terminal does not have the permission of obtaining the camera data collected by the camera; in which the third terminal is a terminal for maintaining and managing the camera data collected by the camera, and the second prompt message is configured to prompt whether to track the first terminal.

Alternatively, the query request includes the account corresponding to the first terminal; and the judging module includes: a detecting sub module, configured to detect whether the account corresponding to the first terminal is in an access permission list corresponding to the camera, in which the access permission list includes an account corresponding to each terminal having the permission of obtaining the camera data collected by the camera; a first determining sub module, configured to determine that the account corresponding to the first terminal has the permission of obtaining the camera data collected by the camera if the account corresponding to the first terminal is in the access permission list; a second determining sub module, configured to determine that the account corresponding to the first terminal does not have the permission of obtaining the camera data collected by the camera if the account corresponding to the first terminal is not in the access permission list.

Alternatively, the device further includes: a binding request receiving module, configured to receive a binding request sent by the second terminal or the camera before the query request receiving module receives the query request sent by the first terminal, in which the binding request includes an account corresponding to the second terminal; a first adding module, configured to add the account corresponding to the second terminal to the access permission list.

Alternatively, the device further includes: a sharing request receiving module, configured to receive a sharing request sent by the second terminal, in which the sharing request includes an account corresponding to a fourth terminal; a second adding module, configured to add the account corresponding to the fourth terminal to the access permission list.

According to a third aspect of embodiments of the present disclosure, a device for processing a request is provided, which includes: a processor; a memory for storing instructions executable by the processor; in which the processor is configured to: receive a query request sent by a first terminal, in which the query request is configured to request to query camera data collected by a camera, and the camera data includes image data and/or video data; judge whether an account corresponding to the first terminal has a permission of obtaining the camera data collected by the camera according to the query request; push a first prompt message to a second terminal bound to the camera if the account corresponding to the first terminal does not have the permission of obtaining the camera data collected by the camera, in which the first prompt message is configured to prompt that the camera data is accessed abnormally.

The technical solutions provided in embodiments of the present disclosure may have advantageous effects as follows.

After receiving the query request sent by the first terminal, by judging whether the account corresponding to the first terminal has the permission of obtaining the camera data collected by the camera according to the query request, and pushing the first prompt message to the second terminal bound to the camera if no, so as to prompt that the camera data is accessed abnormally, when the user having no permission of obtaining the camera data requests to access the camera data, a reminder of abnormal access may be sent out timely, so as to improve the security of the camera data.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram illustrating an implementing environment involved by a method for processing a request according to some exemplary embodiments;
Fig. 2 is a flow chart showing a method for processing a request according to an exemplary embodiment;
Fig. 3 is a flow chart showing a method for processing a request according to another exemplary embodiment;
Fig. 4 is a flow chart showing a method for adding an account according to an exemplary embodiment;
Fig. 5 is a block diagram showing a device for processing a request according to an exemplary embodiment;
Fig. 6 is a block diagram showing a device for processing a request according to another exemplary embodiment;
Fig. 7 is a block diagram showing a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

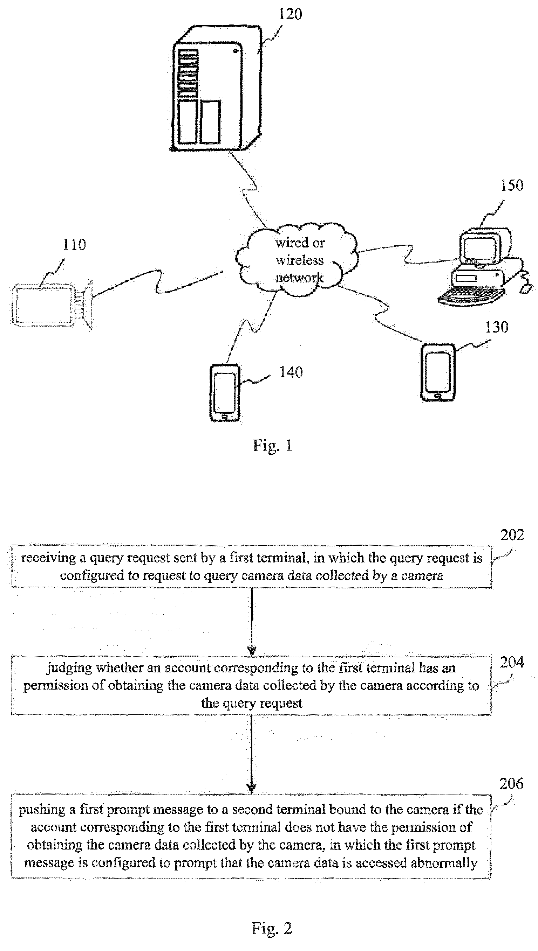

Fig. 1 is a schematic diagram illustrating an implementing environment involved by a method for processing a request according to some exemplary embodiments of the present disclosure. This implementing environment includes a camera 110, a server 120, a first terminal 130, a second terminal 140 and a third terminal 150.

Image data and/or video data collected by the camera 110 are stored in the server 110. The server 120 provides a video data pushing service to each user terminal.

The first terminal 130 and the second terminal 140 may be a smartphone, a tablet computer, an e-book reader, a personal computer and other user terminals respectively.

The third terminal 150 is a terminal for maintaining and managing the server 120 and the data in the server 120 by managers of the server 120.

The camera 110, the first terminal 130, the second terminal 140 and the third terminal 150 are respectively connected with the server 120 via a wired or wireless network.

Fig. 2 is a flow chart showing a method for processing a request according to an exemplary embodiment. The method for processing a request may be applied to the server 120 of the implementing environment shown in Fig. 1. As shown in Fig. 2, the method for processing a request may include following steps.

In step 202, a query request sent by a first terminal is received, in which the query request is configured to request to query camera data collected by a camera.

The camera data includes image data, or the camera data includes video data, or the camera data includes the image data and the video data.

In step 204, it is judged whether an account corresponding to the first terminal has a permission of obtaining the camera data collected by the camera according to the query request.

In step 206, a first prompt message is pushed to a second terminal bound to the camera if the account corresponding to the first terminal does not have the permission of obtaining the camera data collected by the camera, in which the first prompt message is configured to prompt that the camera data is accessed abnormally.

Alternatively, the method further includes: pushing a second prompt message to a third terminal if the account corresponding to the first terminal does not have the permission of obtaining the camera data collected by the camera; in which the third terminal is a terminal for maintaining and managing the camera data collected by the camera, and the second prompt message is configured to prompt whether to track the first terminal.

Alternatively, the query request includes the account corresponding to the first terminal; judging whether the account corresponding to the first terminal has the permission of obtaining the camera data collected by the camera according to the query request includes: detecting whether the account corresponding to the first terminal is in an access permission list corresponding to the camera, in which the access permission list includes an account corresponding to each terminal having the permission of obtaining the camera data collected by the camera; determining that the account corresponding to the first terminal has the permission of obtaining the camera data collected by the camera if the account corresponding to the first terminal is in the access permission list; determining that the account corresponding to the first terminal does not have the permission of obtaining the camera data collected by the camera if the account corresponding to the first terminal is not in the access permission list.

Alternatively, before receiving the query request sent by the first terminal, the method further includes: receiving a binding request sent by the second terminal or the camera, in which the binding request includes or specifies an account corresponding to the second terminal; adding the account corresponding to the second terminal to the access permission list.

Alternatively, the method further includes: receiving a sharing request sent by the second terminal, in which the sharing request includes or specifies an account corresponding to a fourth terminal; adding the account corresponding to the fourth terminal to the access permission list.

In summary, with the method for processing a request according to embodiments of the present disclosure, after receiving the query request sent by the first terminal, by judging whether the account corresponding to the first terminal has the permission of obtaining the camera data collected by the camera according to the query request, and pushing the first prompt message to the second terminal bound to the camera if no, so as to prompt that the camera data is accessed abnormally, when the user having no permission of obtaining the camera data requests to access the camera data, a reminder of abnormal access may be sent out timely, so as to improve the security of the camera data.

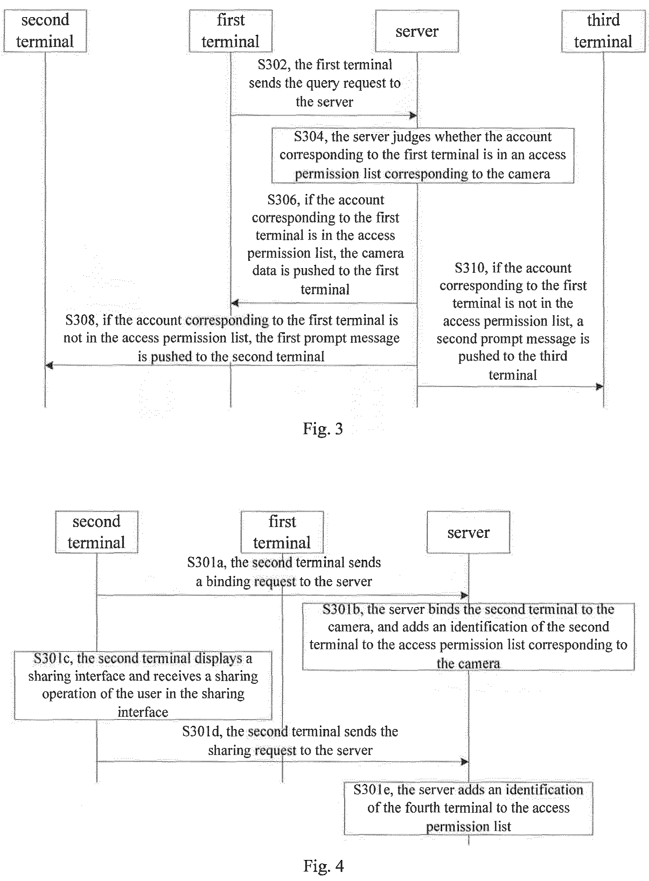

Fig. 3 is a flow chart showing a method for processing a request according to another exemplary embodiment. The method for processing a request may be applied to the server 120 of the implementing environment shown in Fig. 1. As shown in Fig. 3, the method for processing a request may include following steps.

In step 302, the first terminal sends a query request to the server.

The query request includes an account corresponding to the first terminal and is configured to request to query camera data collected by the camera.

When a user corresponding to the first terminal wants to view the camera data collected by the camera, he/she may send the query request to the server via the first terminal. For example, after the first terminal accesses a local area network (LAN) in which the camera is, the first terminal obtains a camera file list collected by the camera and displays it to the user; after the user selects one camera file from the camera file list, the first terminal sends a request for querying the camera data corresponding to the camera file to the server, in which the request may include the account corresponding to the first terminal, an identification of this camera file, an identification of the camera, etc.

In step 304, the server judges whether the account corresponding to the first terminal is in an access permission list corresponding to the camera.

After receiving the query request sent by the first terminal, the server may query the access permission list corresponding to the camera according to the identification of the camera included in the query request, and judge whether the account corresponding to the first terminal is in the access permission list. If yes, it is determined that the account corresponding to the first terminal has the permission of obtaining the camera data collected by the camera, and then step 306 is executed; and if the account corresponding to the first terminal is not in the access permission list, it is determined that the account corresponding to the first terminal does not have the permission of obtaining the camera data collected by the camera, and then steps 308 and 310 are executed.

In step 306, if the account corresponding to the first terminal is in the access permission list, the camera data is pushed to the first terminal.

If the account corresponding to the first terminal is in the access permission list, it indicates that the user corresponding to the second terminal has already shared the camera data collected by the camera to the account corresponding to the first terminal. Now, the server may query the corresponding camera data according to the identification of the camera file included in the query request sent by the first terminal, and then send the queried camera data to the first terminal.

In step 308, if the account corresponding to the first terminal is not in the access permission list, a first prompt message is pushed to the second terminal.

The first prompt message is configured to prompt that the camera data is accessed abnormally.

If the account corresponding to the first terminal is not in the access permission list, it indicates that the user corresponding to the second terminal does not share the camera data collected by the camera to the account corresponding to the first terminal and it is determined that the first terminal accesses the camera file abnormally. Now, the server may push the prompt message to the second terminal, so as to prompt the user corresponding to the second terminal that someone accesses the camera file collected by the camera abnormally, and to alert the user to pay attention to the security of the camera data.

In step 310, if the account corresponding to the first terminal is not in the access permission list, a second prompt message is pushed to the third terminal.

The second prompt message is configured to prompt whether to track the first terminal.

Alternatively, after determining that the first terminal accesses the camera file abnormally, the server may also push the prompt message to the third terminal corresponding to managers of the server, so as to prompt the managers to decide whether to track the first terminal by themselves.

In summary, with the method for processing a request according to embodiments of the present disclosure, after receiving the query request sent by the first terminal, by judging whether the account corresponding to the first terminal has the permission of obtaining the camera data collected by the camera according to the query request, pushing the camera data to the first terminal if yes and pushing the prompt message to the second terminal bound to the camera if no, so as to prompt that the camera data is accessed abnormally, only the user having the permission of obtaining the camera data can view the image data or the video data collected by the camera, and when the user having no permission of obtaining the camera data requests to access the camera data, a reminder of abnormal access may be sent out timely, so as to improve the security of the camera data.

In addition, with the method for processing a request according to embodiments of the present disclosure, by prompting the managers to decide whether to track the terminal performing an illegal access by themselves if it is judged that the account corresponding to the first terminal does not have the permission of obtaining the camera data collected by the camera, the security of the camera data is further improved.

Based on the above method for processing a request shown in Fig. 3 and referring to Fig. 4, which is a flow chart showing a method for adding an account according to an exemplary embodiment, this method for adding an account is applied to add the account having the permission of obtaining the camera data to the access permission list involved by embodiments corresponding to Fig. 3, so that the camera's owner or sharer may view the camera data collected by the camera. This method for adding an account may include following steps.

In step 301a, the second terminal sends a binding request to the server.

The binding request includes an account corresponding to the second terminal and the identification of the camera.

In the smart home, after the camera is installed for the first time, a terminal configured to control the camera needs to be bound to the camera, and then this terminal will have a permission of controlling the camera. When binding, the user may send the binding request to the server via the second terminal, or send the binding request to the server via the camera.

In step 301b, the server binds the second terminal to the camera, and adds an identification of the second terminal to the access permission list corresponding to the camera.

After receiving the binding request sent by the second terminal, the server establishes a corresponding relationship between the account corresponding to the second terminal and the identification of the camera, so as to bind the second terminal to the camera as a control terminal thereof. Then, the second terminal may have a full permission of controlling the camera, other unbound terminals cannot control the camera, or the other terminals can only control a part of functions of the camera.

After binding the second terminal, the server may also add the account corresponding to the second terminal to the access permission list corresponding to the camera.

In step 301c, the second terminal displays a sharing interface and receives a sharing operation of the user in the sharing interface.

The sharing operation is an operation of sharing the camera data collected by the camera to a fourth terminal.

After the second terminal is bound to the camera, the user corresponding to the second terminal may share the permission of obtaining the camera data collected by the camera to other terminals via the second terminal. For example, the second terminal may display the sharing interface of the camera data collected by the camera to the user, in which the sharing interface includes a sharing widget, and after the user clicks the sharing widget, a terminal selection box is popped up, and then the user may select the account corresponding to the fourth terminal, to which the camera data is intended to be shared, for example, a user name or an email, etc.

In step 301d, the second terminal sends a sharing request to the server.

The sharing request includes the account corresponding to the fourth terminal.

After the user selects the fourth terminal in the terminal selection box and determines to share, the second terminal may send the sharing request including the account corresponding to the fourth terminal to the server.

In step 301e, the server adds an identification of the fourth terminal to the access permission list.

After receiving the sharing request and verifying that the second terminal is the terminal which is bound to the camera, the server also adds the account corresponding to the fourth terminal to the access permission list.

In summary, with the method for adding an account according to embodiments of the present disclosure, by adding the accounts carried in the received binding request and sharing request to the access permission list, then only the terminal corresponding to the account bound to the camera and the terminal corresponding to the account to which the camera data is shared are allowed to obtain the camera data collected by the camera, thus ensuring the security of the camera data.

A device embodiment of the present disclosure is shown as following and may be used to execute the method embodiment of the present disclosure. Details undisclosed in the device embodiment of the present disclosure may be referred to the method embodiment of the present disclosure.

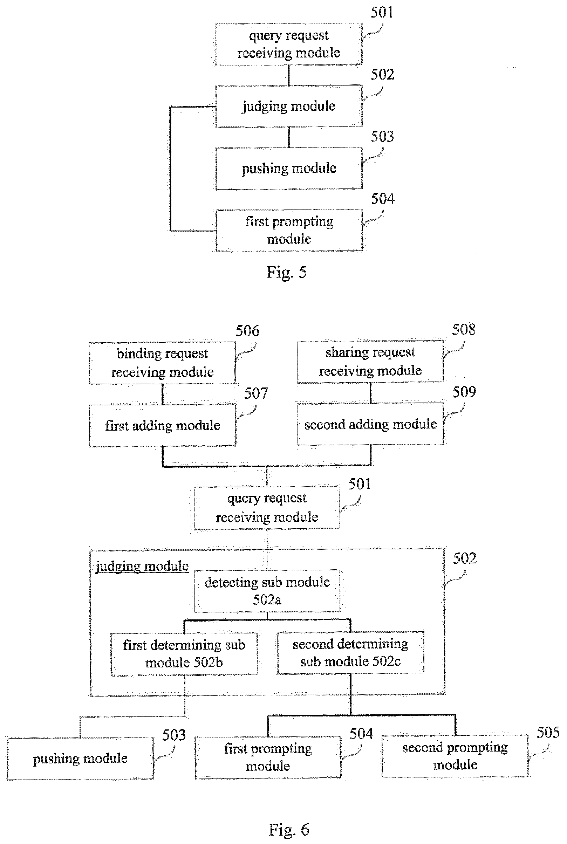

Fig. 5 is a block diagram showing a device for processing a request according to an exemplary embodiment. The device for processing a request may be applied to the server 120 of the implementing environment shown in Fig. 1, and perform all or part of steps shown in Fig. 2, or perform all or part of steps corresponding to the server in the method shown in Fig. 3 or Fig. 4. As shown in Fig. 5, the device for processing a request includes, but is not limited to, a query request receiving module 501, a judging module 502, a pushing module 503 and a first prompting module 504.

The query request receiving module 501 is configured to receive a query request sent by a first terminal, in which the query request is configured to request to query camera data collected by a camera.

The judging module 502 is configured to judge whether the first terminal has a permission of obtaining the camera data collected by the camera according to the query request.

The pushing module 503 is configured to pushing the camera data to the first terminal if the first terminal has the permission of obtaining the camera data collected by the camera.

The first prompting module 504 is configured to push a first prompt message to a second terminal if the first terminal does not have the permission of obtaining the camera data collected by the camera.

The second terminal is a terminal which is bound to the camera. The first prompt message is configured to prompt that the camera data collected by the camera is accessed by the first terminal abnormally.

In summary, with the device for processing a request according to embodiments of the present disclosure, after receiving the query request sent by the first terminal, by judging whether an account corresponding to the first terminal has the permission of obtaining the camera data collected by the camera according to the query request, pushing the camera data to the first terminal if yes and pushing the prompt message to the second terminal bound to the camera if no, so as to prompt that the camera data is accessed abnormally, when the user having no permission of obtaining the camera data requests to access the camera data, a reminder of abnormal access may be sent out timely, so as to improve the security of the camera data.

Fig. 6 is a block diagram showing a device for processing a request according to another exemplary embodiment. The device for processing a request may be applied to the server 120 of the implementing environment shown in Fig. 1, and perform all or part of steps shown in Fig. 2, or perform all or part of steps corresponding to the server in the method shown in Fig. 3 or Fig. 4. As shown in Fig. 6, the device for processing a request includes, but is not limited to, a query request receiving module 501, a judging module 502, a pushing module 503 and a first prompting module 504.

The query request receiving module 501 is configured to receive a query request sent by a first terminal, in which the query request is configured to request to query camera data collected by a camera, and the camera data includes image data and/or video data.

The judging module 502 is configured to judge whether an account corresponding to the first terminal has a permission of obtaining the camera data collected by the camera according to the query request.

The pushing module 503 is configured to pushing the camera data to the first terminal if the account corresponding to the first terminal has the permission of obtaining the camera data collected by the camera.

The first prompting module 504 is configured to push a first prompt message to a second terminal bound to the camera if the account corresponding to the first terminal does not have the permission of obtaining the camera data collected by the camera.

Alternatively, the device further includes: a second prompting module 505.

The second prompting module 505 is configured to push a second prompt message to a third terminal if the account corresponding to the first terminal does not have the permission of obtaining the camera data collected by the camera; in which the third terminal is a terminal for maintaining and managing the camera data collected by the camera, and the second prompt message is configured to prompt whether to track the first terminal.

Alternatively, the query request includes the account corresponding to the first terminal; and the judging module 502 includes: a detecting sub module 502a, a first determining sub module 502b and a second determining sub module 502c.

The detecting sub module 502a is configured to detect whether the account corresponding to the first terminal is in an access permission list corresponding to the camera, in which the access permission list includes an account corresponding to each terminal having the permission of obtaining the camera data collected by the camera.

The first determining sub module 502b is configured to determine that the account corresponding to the first terminal has the permission of obtaining the camera data collected by the camera if the account corresponding to the first terminal is in the access permission list.

The second determining sub module 502c is configured to determine that the account corresponding to the first terminal does not have the permission of obtaining the camera data collected by the camera if the account corresponding to the first terminal is not in the access permission list.

Alternatively, the device further includes: a binding request receiving module 506 and a first adding module 507.

The binding request receiving module 506 is configured to receive a binding request sent by the second terminal or the camera before the query request receiving module receives the query request sent by the first terminal, in which the binding request includes an account corresponding to the second terminal.

The first adding module 507 is configured to add the account corresponding to the second terminal to the access permission list.

Alternatively, the device further includes: a sharing request receiving module 508 and a second adding module 509.

The sharing request receiving module 508 is configured to receive a sharing request sent by the second terminal, in which the sharing request includes an account corresponding to a fourth terminal.

The second adding module 509 is configured to add the account corresponding to the fourth terminal to the access permission list.

In summary, with the device for processing a request according to embodiments of the present disclosure, after receiving the query request sent by the first terminal, by judging whether the account corresponding to the first terminal has the permission of obtaining the camera data collected by the camera according to the query request, pushing the camera data to the first terminal if yes and pushing the prompt message to the second terminal bound to the camera if no, so as to prompt that the camera data is accessed abnormally, when the user having no permission of obtaining the camera data requests to access the camera data, a reminder of abnormal access may be sent out timely, so as to improve the security of the camera data.

In addition, with the device for processing a request according to embodiments of the present disclosure, by prompting the managers to decide whether to track the terminal performing an illegal access by themselves if it is judged that the account corresponding to the first terminal does not have the permission of obtaining the camera data collected by the camera, the security of the camera data is further improved.

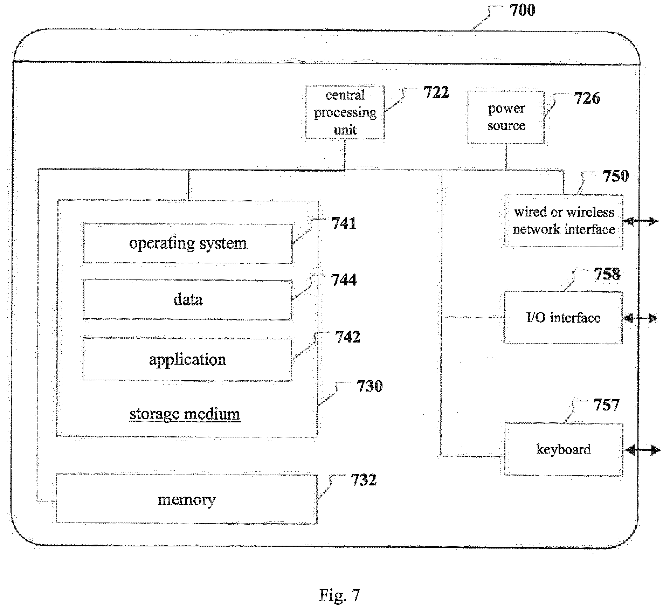

Fig. 7 is a block diagram showing a device 700 according to an exemplary embodiment. The device 700 may have a relatively large difference due to different configurations and properties, which may include one or more central processing units (CPUs) 722 (e.g., one or more processors), a memory 732, one or more storage mediums 730 (e.g. one or more mass storage devices) for storing applications 742 or data 744. The memory 732 and the storage medium 730 may be a transitory storage memory or a non-transitory storage memory. The programs stored in the storage medium 730 may include one or more modules (not shown), each module may include a series of instruction operations for the device, and the series of instruction operations may be configured to implement all of the steps shown in Fig. 2, or to implement all or part of the steps executed by the server shown in Fig. 3 or Fig. 4. Furthermore, the central processing unit 722 is configured to communicate with the storage medium 730 to perform the series of instruction operations stored in the storage medium 730 on the device 700.

The device 700 may also include one or more power sources 726, one or more wired or wireless network interfaces 750, one or more input-output (I/O) interfaces 758, one or more keyboards 757, and/or, one or more operating systems 741, for example, Windows ServerTM, Mac OS XTM, UnixTM, LinuxTM, FreeBSDTM, .etc.

With respect to the devices in the above embodiments, the specific manners for performing operations for individual modules therein have been described in detail in the embodiments regarding the methods, which are not elaborated herein again.

## Claims

1. A method for processing a request, comprising:
receiving (202) a query request sent by a first terminal, wherein the query request is configured to request to query camera data collected by a camera, and the camera data comprises at least one of image data or video data;
judging (204) whether an account corresponding to the first terminal has a permission of obtaining the camera data collected by the camera according to the query request;
pushing (206) a first prompt message to a second terminal bound to the camera if the account corresponding to the first terminal does not have the permission of obtaining the camera data collected by the camera, wherein the first prompt message is configured to prompt that the camera data is accessed abnormally.

2. The method according to claim 1, further comprising:
pushing (S310) a second prompt message to a third terminal if the account corresponding to the first terminal does not have the permission of obtaining the camera data collected by the camera; wherein the third terminal is a terminal for maintaining and managing the camera data collected by the camera, and the second prompt message is configured to prompt whether to track the first terminal.

3. The method according to claim 1 or 2, wherein the query request comprises the account corresponding to the first terminal; and judging whether an account corresponding to the first terminal has a permission of obtaining the camera data collected by the camera according to the query request comprises:
detecting (S304) whether the account corresponding to the first terminal is in an access permission list corresponding to the camera, wherein the access permission list comprises an account corresponding to each terminal having the permission of obtaining the camera data collected by the camera;
determining (S306) that the account corresponding to the first terminal has the permission of obtaining the camera data collected by the camera if the account corresponding to the first terminal is in the access permission list;
determining (S308) that the account corresponding to the first terminal does not have the permission of obtaining the camera data collected by the camera if the account corresponding to the first terminal is not in the access permission list.

4. The method according to any preceding claim, before receiving a query request sent by a first terminal, further comprising:
receiving a binding request sent by the second terminal or the camera, wherein the binding request comprises an account corresponding to the second terminal;
adding the account corresponding to the second terminal to the access permission list.

5. The method according to any preceding claim, further comprising:
receiving a sharing request sent by the second terminal, wherein the sharing request comprises an account corresponding to a fourth terminal;
adding the account corresponding to the fourth terminal to the access permission list.

6. A device for processing a request, comprising:
a query request receiving module (501), configured to receive a query request sent by a first terminal, wherein the query request is configured to request to query camera data collected by a camera, and the camera data comprises at least one of image data or video data;
a judging module (502), configured to judge whether an account corresponding to the first terminal has a permission of obtaining the camera data collected by the camera according to the query request;
a first prompting module (504), configured to push a first prompt message to a second terminal bound to the camera if the account corresponding to the first terminal does not have the permission of obtaining the camera data collected by the camera, wherein the first prompt message is configured to prompt that the camera data is accessed abnormally.

7. The device according to claim 6, further comprising:
a second prompting module (505), configured to push a second prompt message to a third terminal if the account corresponding to the first terminal does not have the permission of obtaining the camera data collected by the camera; wherein the third terminal is a terminal for maintaining and managing the camera data collected by the camera, and the second prompt message is configured to prompt whether to track the first terminal.

8. The device according to claim 6 or 7, wherein the query request comprises the account corresponding to the first terminal; and the judging module (502) comprises:
a detecting sub module (502a), configured to detect whether the account corresponding to the first terminal is in an access permission list corresponding to the camera, wherein the access permission list comprises an account corresponding to each terminal having the permission of obtaining the camera data collected by the camera;
a first determining sub module (502b), configured to determine that the account corresponding to the first terminal has the permission of obtaining the camera data collected by the camera if the account corresponding to the first terminal is in the access permission list;
a second determining sub module (502c), configured to determine that the account corresponding to the first terminal does not have the permission of obtaining the camera data collected by the camera if the account corresponding to the first terminal is not in the access permission list.

9. The device according to any of claims 6, 7 or 8, further comprising:
a binding request receiving module (506), configured to receive a binding request sent by the second terminal or the camera before the query request receiving module (501) receives the query request sent by the first terminal, wherein the binding request comprises an account corresponding to the second terminal;
a first adding module (507), configured to add the account corresponding to the second terminal to the access permission list.

10. The device according to any of claims 6 to 9, further comprising:
a sharing request receiving module (508), configured to receive a sharing request sent by the second terminal, wherein the sharing request comprises an account corresponding to a fourth terminal;
a second adding module (509), configured to add the account corresponding to the fourth terminal to the access permission list.

11. A device for processing a request, comprising:
a processor (722); and
a memory (732) for storing instructions executable by the processor;
wherein the processor is configured to:
receive a query request sent by a first terminal, wherein the query request is configured to request to query camera data collected by a camera, and the camera data comprises at least one of image data or video data;
judge whether an account corresponding to the first terminal has a permission of obtaining the camera data collected by the camera according to the query request;
push a first prompt message to a second terminal bound to the camera if the account corresponding to the first terminal does not have the permission of obtaining the camera data collected by the camera, wherein the first prompt message is configured to prompt that the camera data is accessed abnormally.

12. The device according to claim 11, further comprising:
pushing a second prompt message to a third terminal if the account corresponding to the first terminal does not have the permission of obtaining the camera data collected by the camera; wherein the third terminal is a terminal for maintaining and managing the camera data collected by the camera, and the second prompt message is configured to prompt whether to track the first terminal.

13. The device according to claim 11 or 12, wherein the query request comprises the account corresponding to the first terminal; and judging whether an account corresponding to the first terminal has a permission of obtaining the camera data collected by the camera according to the query request comprises:
detecting whether the account corresponding to the first terminal is in an access permission list corresponding to the camera, wherein the access permission list comprises an account corresponding to each terminal having the permission of obtaining the camera data collected by the camera;
determining that the account corresponding to the first terminal has the permission of obtaining the camera data collected by the camera if the account corresponding to the first terminal is in the access permission list;
determining that the account corresponding to the first terminal does not have the permission of obtaining the camera data collected by the camera if the account corresponding to the first terminal is not in the access permission list.

14. The device according to any preceding claim, before receiving a query request sent by a first terminal, further comprising:
receiving a binding request sent by the second terminal or the camera, wherein the binding request comprises an account corresponding to the second terminal;
adding the account corresponding to the second terminal to the access permission list.

15. A computer program, which when executing on a processor, performs a method according to any one of claims 1 to 5.
